(19) Europäisches Patentamt
European Patent Office
Office européen des brevets

(11) **EP 4 410 747 A1**

## (12) EUROPEAN PATENT APPLICATION
published in accordance with Art. 153(4) EPC

(43) Date of publication:
**07.08.2024 Bulletin 2024/32**

(21) Application number: **22931246.7**

(22) Date of filing: **17.03.2022**

(51) International Patent Classification (IPC):
***C02F 1/461*** (2023.01)

(52) Cooperative Patent Classification (CPC):
**C02F 1/461**

(86) International application number:
**PCT/JP2022/012289**

(87) International publication number:
**WO 2023/175834 (21.09.2023 Gazette 2023/38)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Enagic International Co., Ltd.**
**Chuo-ku**
**Tokyo 1040031 (JP)**

(72) Inventor: **OKUMURA, Kazuhiko**
**Tokyo 104-0031 (JP)**

(74) Representative: **Keltie LLP**
**No. 1 London Bridge**
**London SE1 9BA (GB)**

(54) **ELECTROLYZED WATER GENERATION DEVICE AND CONTROL METHOD FOR ELECTROLYZED WATER GENERATION DEVICE**

(57) The disclosed electrolyzed water generator 1 includes: at least a pair of an anode 32 and a cathode 31; an electrolytic bath 3 having an anode compartment 32a and a cathode compartment 31a separated from each other by a diaphragm 33, with the anode 32 housed in the anode compartment 32a, and the cathode 31 housed in the cathode compartment 31a; a power supply unit 14 for allowing current to flow between the anode 32 and the cathode 31; and a control unit 10 for controlling the power supply unit 14. The control unit 10 is configured to control the power supply unit 14 so as to cause electrolysis of feed water introduced into the electrolytic bath 3, so that cathode water is generated in the cathode compartment 31a and anode water is generated in the anode compartment 32a. The control unit 10 detects a pH of the cathode water based on a value of $A\log(i/f) + B$, where $A$ and $B$ are constants, with an applied current during the electrolysis denoted by $i$ [A] and a flow rate of the feed water in the cathode compartment 31a during the electrolysis denoted by $f$ [L/min].

*FIG. 2*

EP 4 410 747 A1

**Description**

[Technical Field]

The present invention relates to an electrolyzed water generator and a method for controlling an electrolyzed water generator.

[Background Art]

The conventional electrolyzed water generator is an apparatus which is easily connectable to a water supply or well via a water flow pipe, and supplies cathode water (alkaline ionized water or reduced water) or anode water (acidic water) through electrolysis. The water from a water supply or well is purified in some cases with a water purification filter, such as activated carbon, before being introduced into the apparatus. The water purification filter is incorporated in the apparatus in some cases. Hereinafter, the water introduced into the electrolyzed water generator is referred to as feed water.

The water quality of the feed water varies considerably depending on regions and countries. For example, free carbon dioxide, which means carbon dioxide gas dissolved in water, is much contained in groundwater. The feed water in Japan is usually soft water, whereas the feed water in other countries, such as the United States and Europe, is usually hard water. Therefore, the types and amounts of ions generated during the electrolysis of the feed water vary considerably depending on regions and countries. Especially, free carbon dioxide is known to change into various ionic forms according to pH, and that a buffering effect is exerted depending on the abundance percentage of each of the ionic forms. Therefore, it is required to control the electrolyzed water generator according to the water quality of the feed water.

Regarding electrolyzed water generators for household use, the JIS standards state as precautions on use that "those who to drink for the first time should start drinking from a small amount in a range of pH close to neutral," and "when alkaline electrolyzed water is used for drinking, the appropriate pH value is 9.5, and water with a pH of 10 or higher is not drinkable and should not be directly used for drinking." For this reason, it is required to inform the user of the pH of electrolyzed water.

The user selects a desired electrolyzed water. However, on the selection button (selector switch), the selection of "weak alkaline water (pH 8.5), medium alkaline water (pH 9.0), strong alkaline water (pH 9.5)", or "weakly reduced water, medium reduced water, strong reduced water" is merely displayed, for which the pHs of these electrolyzed waters are not necessarily detected. Therefore, disadvantageously, the pH is not detected or displayed when drinking, or there is no guarantee on the selected pH in some cases.

To address this, many attempts have been made to introduce into an electrolyzed water generator, a pH meter or a pH sensor as a means for knowing the pH of the desired cathode water or anode water, but the introduction thereof is not easy. This is because, in terms of costs, it has been difficult to realize a pH meter or a pH sensor which can response so quickly and is so maintenance-free as to be introduced into the actual electrolyzed water generator.

[Citation List]

[Patent Literature]

Patent Literature 1: Japanese Laid-Open Patent Publication No. H4-197488
Patent Literature 2: Japanese Laid-Open Patent Publication No. H7-108272

[Summary of Invention]

[Technical Problem]

Patent Literature 1 discloses an electrolyzed water maker configured to determine the pH from a theoretical formula, and perform the control accordingly. The theoretical formula used in the literature is $pH = -\log\{10^{-7} - i/(W \cdot F)\}$, where i represents an applied current [A], W represents a flow rate [L/sec], and F represents a Faraday constant [C/mol], according to which the pH of alkaline water can be known continuously. However, this theoretical formula is defined for theoretical water (or water free of impurities), and even if barely applicable to pure water, it cannot be applied to ordinary tap water or well water, much less to feed water or electrolyzed water in electrolyzed water generators. Moreover, when this theoretical formula is applied to the actual apparatus, the antilogarithm can take a negative value, leaving a doubt whether it will function properly.

Patent Literature 2 discloses a method for continuous generation of ion-rich water, which determines, without using a pH meter, a required electric power according to the amount of bicarbonate ions. However, the relationship between the electrical conductivity and the bicarbonate ion concentration in Patent Literature 2 is a relationship in tap water, and is not a relationship during electrolysis. As mentioned above, the water quality of tap water varies considerably depending on regions and countries. Therefore, the method of Patent Literature 2 is considered to be poor in reliability for determining the amount of bicarbonate ions during electrolysis. Bicarbonate ions are inherently unstable and easily combined with minerals in water, and because of this, are not suitable as an indicator of pH.

Under the circumstances as above, one of the objectives of the present disclosure is to detect the pH of electrolyzed water as necessary.

[Solution to Problem]

One aspect of the present disclosure relates to an electrolyzed water generator. The electrolyzed water generator includes: at least a pair of an anode and a cathode; an electrolytic bath having an anode compartment and a cathode compartment separated from each other by a diaphragm, with the anode housed in the anode compartment, and the cathode housed in the cathode compartment; a power supply unit for allowing current to flow between the anode and the cathode; and a control unit for controlling the power supply unit, the control unit being configured to control the power supply unit so as to cause electrolysis of feed water introduced into the electrolytic bath, so that cathode water is generated in the cathode compartment and anode water is generated in the anode compartment, wherein the control unit detects a pH of the cathode water based on a value of $A\log(i/f) + B$, where A and B are constants, with an applied current during the electrolysis denoted by i [A] and a flow rate of the feed water in the cathode compartment during the electrolysis denoted by f [L/min].

Another aspect of the present disclosure relates to a method for controlling an electrolyzed water generator. The method is for controlling an electrolyzed water generator which includes at least a pair of an anode and a cathode, an electrolytic bath having an anode compartment and a cathode compartment separated from each other by a diaphragm, with the anode housed in the anode compartment, and the cathode housed in the cathode compartment, and a power supply unit for allowing current to flow between the anode and the cathode, the method including steps of: (i) controlling the power supply unit so as to cause electrolysis of feed water introduced into the electrolytic bath, so that cathode water is generated in the cathode compartment and anode water is generated in the anode compartment; and (ii) detecting a pH of the cathode water based on a value of $A\log(i/f) + B$, where A and B are constants, with an applied current during the electrolysis denoted by i [A] and a flow rate of the feed water in the cathode compartment during the electrolysis denoted by f [L/min].

[Advantageous Effects of Invention]

According to the present disclosure, the pH of the electrolyzed water can be detected as necessary.

While the novel features of the invention are set forth particularly in the appended claims, the invention, both as to organization and content, will be better understood and appreciated, along with other objects and features thereof, from the following detailed description taken in conjunction with the drawings.

[Brief Description of Drawings]

[FIG. 1] A schematic front view of an electrolyzed water generator of Embodiment 1.
[FIG. 2] A graph showing measurement test results in Embodiment 1.
[FIG. 3] A schematic front view of an electrolyzed water generator of Embodiment 2.
[FIG. 4] A flowchart of a method for controlling an electrolyzed water generator.

[Description of Embodiments]

Embodiments of an electrolyzed water generator and a method for controlling an electrolyzed water generator according to the present disclosure will be described below by way of examples. It is to be noted, however, that the present disclosure is not limited to the examples described below. In the description below, specific numerical values and materials are exemplified in some cases, but other numerical values and materials may be adopted as long as the effects of the present disclosure can be achieved.

(Electrolyzed water generator)

An electrolyzed water generator according to the present disclosure includes at least a pair of an anode and a cathode, an electrolytic bath, a power supply unit, and a control unit.

The at least a pair of an anode and a cathode may be each composed of an electrode plate. A single pair of the anode and the cathode may be included, or a plurality of pairs of the anode and the cathode may be included.

The electrolytic bath has an anode compartment and a cathode compartment separated from each other by a diaphragm. The diaphragm is an ion permeable material, which may be, for example, a porous membrane, or an ion-exchange membrane. The anode is housed in the anode compartment. The cathode is housed in the cathode compartment. There is no limitation on the material and the structure of the anode and the cathode, and any known material, such as a metal and a carbon material may be used. The number of the anode compartments may be the same as or different from the number of the anodes. The number of the cathode compartments may be the same as or different from the number of the cathodes. When a plurality of anodes are present, one or more anodes may be housed in each of a plurality of the anode compartments. When a plurality of cathodes are present, one or more cathodes may be housed in each of a plurality of the cathode compartments.

The power supply unit is an element for allowing current to flow between the anode and the cathode. The power supply unit may be configured to allow current to flow between the anode and the cathode, for example, by applying a DC voltage between the anode and the cathode.

The control unit is an element for controlling the power supply unit. The control unit is configured to control the power supply unit so as to cause electrolysis of feed water introduced into the electrolytic bath, so that cathode water is generated in the cathode compartment and anode water is generated in the anode compartment. The control unit may include an arithmetic device, and a memory device in which a program executable by the arithmetic device is stored. The program stored in the memory device may be a program for executing an electrolyzed water generator control method according to the present disclosure in a computer.

The control unit detects the pH of the cathode water based on the value of $A\log(i/f) + B$, with the applied current during the electrolysis denoted by $i$ [A] and the flow rate of the feed water in the cathode compartment during the electrolysis denoted by $f$ [L/min]. Here, A and B are each a constant, which, for example, may be determined analytically and/or experimentally based on the specific configuration of the electrolyzed water generator and the water quality of the feed water.

The present inventor has found that by using the value of $A\log(i/f) + B$, the pH of the cathode water generated in the electrolyzed water generator can be directly found out from the phenomenon observed during the electrolysis, and eventually, the pH of the desired cathode water can be detected as necessary at an appropriate timing. The details thereof will be described herein later. When the pH is detected, the electrolyzed water generator automatically, or the operator of the apparatus manually can increase or decrease, or interrupt and resume the applied current for electrolysis and/or the flow rate of the feed water. When the electrolyzed water generator automatically perform such an operation, it is beneficial in that the operation can be done with an element, such as a power supply unit, within the apparatus only.

The value of the constant A may be set as a value intrinsic to the electrolyzed water generator, based on the actual measurement value of pH of the cathode water and the value of $i/f$. The present inventor has found that there is a proportional correlation between the actual measurement value of pH of the cathode water and the value of $\log(i/f)$. This proportional relationship is defined by the constant A, and the constant A takes a value intrinsic for each electrolyzed water generator, which are also what has been found by the present inventor. The pH of the cathode water for setting the constant A may be actually measured using, for example, a pH meter or a pH sensor. The setting of the constant A may be done by, for example, the manufacturer of an electrolyzed water generator before shipping of the electrolyzed water generator. Regardless of the water quality of the feed water, the constant A is a value intrinsic to each apparatus. Therefore, the manufacturer can do the setting at any location using any feed water. The value of $i$ may be detected by a current sensor generally equipped in electrolyzed water generators. The value of $f$ may be detected by a flow sensor generally equipped in electrolyzed water generators.

The value of the constant B may be set as a value corresponding to the water quality of the feed water, based on at least the actual measurement value of pH of the cathode water. The present inventor has found that, in order to detect the pH of cathode water with the water quality of feed water taken into account, it is effective to add the constant B to the $A\log(i/f)$. The value of the constant B can be determined, for example, with the value of the constant A fixed in advance as necessary, by introducing feed water into the electrolyzed water generator, and actually measuring the pH of the cathode water obtained by electrolyzing the feed water, so as to be determined based on the actual measurement value thus obtained. The constant B may be set using feed water on-site where an electrolyzed water generator is actually used, before the start of normal use of the electrolyzed water generator. When there is a possibility that the water quality of the feed water may change over time, the constant B may be reset by setting the constant B at an appropriate timing.

The electrolyzed water generator may further include a notification unit configured to notify an information regarding the detected pH of the cathode water (hereinafter, sometimes, the detected pH). For example, the notification unit may notify the user of the information visually or audibly. As a specific example, the notification unit may include a display that displays the detected pH value, a lamp that changes color with the detected pH value, or a speaker that audibly conveys the detected pH value. The information regarding the pH may include the values of the constant A and the constant B.

(Electrolyzed water generator control method)

An electrolyzed water generator control method according to the present disclosure is a method for controlling an electrolyzed water generator which includes at least a pair of an anode and a cathode, an electrolytic bath, and a power supply unit. The configurations of the pair of the anode and the cathode, the electrolytic bath, and the power supply unit may be the same as those described above. The control method includes steps (i) and (ii).

In the step (i), the power supply unit is controlled so as to generate cathode water in the cathode compartment and anode water in the anode compartment through electrolysis of feed water introduced into the electrolytic bath. This allows the user to utilize the cathode water or the anode water, as necessary.

In the step (ii), the pH of the cathode water is detected, based on the value of $A\log(i/f) + B$, with the applied current during the electrolysis denoted by $i$ [A] and the flow rate of the feed water in the cathode compartment during the electrolysis denoted by $f$ [L/min]. Here, A and B are each a constant, which, for example, may be determined analytically and/or experimentally based on the specific configuration of the electrolyzed water generator and the water quality of the feed water. Once $A\log(i/f) + B$ is formularized, the pH of the cathode water can be detected as necessary by using the value of $A\log(i/f) + B$. When the pH is detected, the electrolyzed water generator automatically, or the operator of the apparatus manually can increase or decrease, or interrupt and resume the applied current for electrolysis and/or the flow rate of the feed water. Note that "using the value of $A\log(i/f) + B$" widely includes using the value(s) of $A\log(i/f) + B$ at one or more any timings as an index. The value of $A\log(i/f) + B$ may be used as it is, or converted with various functions and used. The values of $A\log(i/f) + B$ at a plurality of timings may be processed (e.g., integrated or averaged) and used.

The control method of the electrolyzed water generator may further include a step (iii) of, before the step (ii), setting a value of the constant A as a value intrinsic to the electrolyzed water generator, based on the actual measurement value of pH of the cathode water and the value of $i/f$. In that case, the pH of the cathode water may be actually measured using, for example, a pH meter or a pH sensor. The value $i$ may be detected by a current sensor generally equipped in electrolyzed water generators. The value $f$ may be detected by a flow sensor generally equipped in electrolyzed water generators.

The control method of the electrolyzed water generator may further include a step (iv) of, before the step (ii), setting a value of the constant B as a value corresponding to the water quality of the feed water, based on at least the actual measurement value of pH of the cathode water. The value of the constant B can be determined, for example, with the value of the constant A fixed in advance as necessary, by introducing feed water into the electrolyzed water generator, and actually measuring the pH of the cathode water obtained by electrolyzing the feed water, so as to be determined based the actual measurement value thus obtained.

The control method of the electrolyzed water generator may further include a step (v) of notifying an information regarding the detected pH of the cathode water. In the step (v), for example, the information may be notified visually or aurally to the user. As a specific example, in the step (v), the information may be notified by a display that displays the detected pH value, by a lamp that changes color with the detected pH value, or by a speaker that audibly conveys the detected pH value.

As described above, according to the present disclosure, the pH of the electrolyzed water (cathode water) can be detected as necessary. Furthermore, according to the present disclosure, the following effects (1) to (3) can be obtained.

(1) By using the parameter $(i/f)$, which has not been shown so far, optimal control for obtaining water with a desired pH can be realized, without depending on the water quality of the feed water or the mode of use and regardless of the cultural lifestyle in domestic and overseas.

(2) Since the sensors conventionally installed in electrolyzed water generators are used to acquire the values of the current and the flow rate during the electrolysis, it is possible to detect the pH of the electrolyzed water at an appropriate timing and control the pH, without introducing any additional device.

(3) By using a simple parameter, that is, $(i/f)$, instead of using huge and complicated data for each type and each flow rate of electrolyzed water (e.g., strong cathode water, medium cathode water, or weak cathode water) during the use of the apparatus, the optimization of the timing of obtaining water with a desired pH can be realized at low cost, without requiring a high-capacity microcomputer or the like in order to realize the control unit or control method of the present disclosure.

It has been revealed by the inventor that the pH of electrolyzed water (cathode water) in the electrolyzed water generator can be generalized by the following equation (1), from the later-described Embodiments 1 and 2.
[Math. 1]

$$pH = A\log(i/f) + B \qquad \dots (1)$$

Here, i represents the electrolysis current, that is, the applied current [A], f represent the flow rate of the feed water [L/min] in the cathode compartment during the electrolysis, and A and B are each constants. The base of $\log(i/f)$ is 10, and all the logarithms in the present specification are common logarithms.

On the other hand, the following equation (2) can be theoretically derived from the definition of pH of pure water.
[Math. 2]

$$pH = \log[OH^-] + 14 \qquad \dots (2)$$

The equations (1) and (2) are expressed in a mathematically analogous form. In the case of pure water, A = 1 and B = 14.

From the results of Embodiments 1 and 2, it can be roughly inferred that the constant A in the equation (1) is determined by the structure or shape and the material of the electrolytic bath, and the structure or shape and the material of the diaphragm, etc.

The constant B in the equation (1) is roughly determined by the water quality of the feed water. Specifically, anions, such as $Cl^-$, $NO_3^-$, $SO_4^{2-}$, $HCO_3^-$, and $CO_3^{2-}$, and cations, such as $Na^+$, $K^+$, $Ca^{2+}$, and $Mg^{2+}$, are contained in the feed water referred to in the present disclosure, and water, such as well water, groundwater, freshwater from rivers or lakes. These ions differ in the type and amount depending on regions and countries. As for the contributions made by these ions, although some more research has to be waited to know their details, it can be inferred that the constant B corresponds to the total of their contributions.

In the following, examples of the electrolyzed water generator and the electrolyzed water generator control method according to the present disclosure will be specifically described with reference to the drawings. The components and processes as described above can be applied to the components and processes of the below-described examples of the electrolyzed water generator and the electrolyzed water generator control method. The components and processes of the below-described examples of the electrolyzed water generator and the electrolyzed water generator control method can be modified based on the description above. The matters as described below may be applied to the above embodiments. Of the components and processes of the below-described examples of the electrolyzed water generator and the electrolyzed water generator control method, the components and processes which are not essential to the electrolyzed water generator and the electrolyzed water generator control method according to the present disclosure may be omitted. The figures below are schematic and not intended to accurately reflect the shape and the number of the actual members.

<<Embodiment 1>>

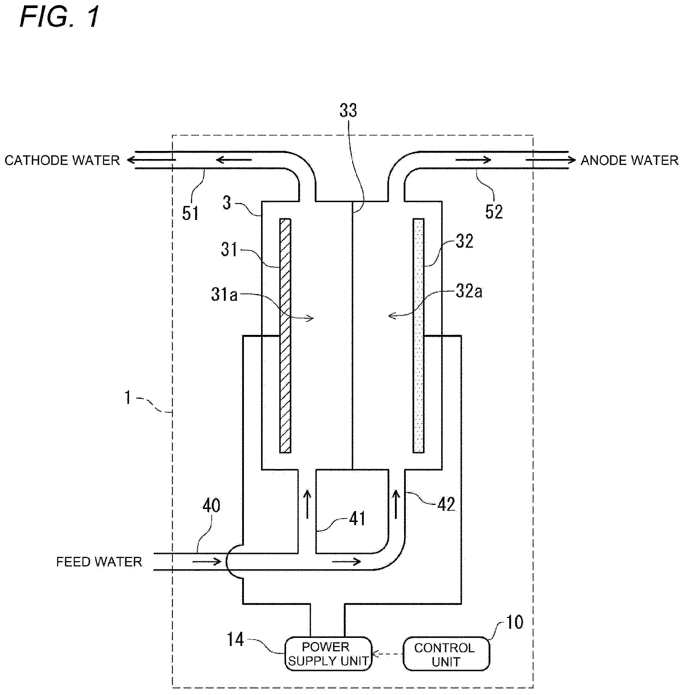

A description will be given below of Embodiment 1 of the present disclosure. As illustrated in FIG. 1, an electrolyzed water generator 1 of the present embodiment includes a pair of an anode 32 and a cathode 31, an electrolytic bath 3, a power supply unit 14, and a control unit 10. The electrolyzed water generator 1 further includes a water feed pipe 40, a cathode compartment water feed pipe 41, an anode compartment water feed pipe 42, a cathode compartment water spout pipe 51, and an anode compartment water spout pipe 52.

The pair of the anode 32 and the cathode 31 are each composed of an electrode plate. Each of the anode 32 and the cathode 31 may have, for example, a rectangular plate-like shape, but not limited thereto.

The electrolytic bath 3 has an anode compartment 32a and a cathode compartment 31a separated from each other by a diaphragm 33. The anode 32 is housed in the anode compartment 32a. The cathode 31 is housed in the cathode compartment 31a. The electrolytic bath 3 of the present embodiment has one anode compartment 32a and one cathode compartment 31a. In the electrolytic bath 3, feed water is electrolyzed, so that cathode water is generated in the cathode compartment 31a, and anode water is generated in the anode compartment 32a. The diaphragm 33 has a function to allow the anions formed in the cathode compartment 31a to migrate into the anode compartment 32a, and allow the cations formed in the anode compartment 32a to migrate into the cathode compartment 31a.

The power supply unit 14 is an element for allowing current to flow between the anode 32 and the cathode 31 by applying a DC voltage therebetween. The power supply unit 14 is provided outside the electrolytic bath 3 and is connected to the anode 32 and the cathode 31.

The control unit 10 is an element for controlling the power supply unit 14. The control unit 10 is configured to control the power supply unit 14 so as to cause electrolysis of feed water introduced into the electrolytic bath 3, so that cathode water is generated in the cathode compartment 31a and anode water is generated in the anode compartment 32a. The control unit 10 detects the pH of the cathode water (electrolyzed water) based on the value of $A\log(i/f) + B$, where A and B are constants, with the applied current during the electrolysis denoted by i [A], and the flow rate of the feed water in the cathode compartment 31a during the electrolysis denoted by f [L/min]. The control unit 10 may control the power supply unit 14 so as to increase the (i/f) when the pH of the cathode water is lower than the desired value, and decrease the (i/f) when the pH of the cathode water is higher than the desired value.

The water feed pipe 40, the cathode compartment water feed pipe 41, and the anode compartment water feed pipe 42 are pipes for supplying feed water into the electrolytic bath 3. The water feed pipe 40 connects a supply source of feed water (e.g., water supply or well) to the cathode compartment water feed pipe 41 and the anode compartment water feed pipe 42. The cathode compartment water feed pipe 41 is connected to an inlet of the cathode compartment 31a. The anode compartment water feed pipe 42 is connected to an inlet of the anode compartment 32a.

The cathode compartment water spout pipe 51 and the anode compartment water spout pipe 52 are pipes for supplying the cathode water and the anode water generated in the electrolytic bath 3 to the outside. The cathode compartment water spout pipe 51 is connected to an outlet of the cathode compartment 31a. The anode compartment water spout pipe 52 is connected to an outlet of the anode compartment 32a.

- Measurement test using electrolyzed water generator -

The following measurement test was carried out using the above electrolyzed water generator 1. Specifically, feed water was supplied to the electrolyzed water generator 1, which was then electrolyzed with a constant current, to obtain electrolyzed water through the cathode compartment water spout pipe 51 and the anode compartment water spout pipe 52. Here, the cathode water discharged from the cathode compartment water spout pipe 51 was sampled into a beaker for 1 minute, to measure the flow rate with a measuring cylinder.

The pH values of the electrolyzed water and the feed water were measured using a glass-electrode-method hydrogen ion concentration indicator D-74 and a pH electrode 9630-10D (available from HORIBA Advanced Techno, Co., Ltd.).

With respect to the feed water to be supplied to the electrolyzed water generator 1, the pH, the total hardness, the hydrogen carbonate ion concentration, and the free carbon dioxide concentration were measured, and those measured were taken as the water quality of the feed water. Especially, acid consumption (pH 4.8) is equivalent to M-alkalinity, and M-alkalinity can be regarded as approximately equal to the hydrogen carbonate ion concentration in water. Therefore, the measured value of acid consumption (pH 4.8) was taken as the hydrogen carbonate ion concentration. In addition, alkali consumption (pH 8.3) is equivalent to P-acidity, and P-acidity can be regarded as approximately equal to the free carbon dioxide concentration in water. Therefore, the measured value of alkali consumption (pH 8.3) was taken as the free carbon dioxide concentration.

The total hardness of the feed water was measured in accordance with the method specified in 15.1 Total hardness, 15.1.1 Chelate titration method in JIS K 0101:1998 Testing methods for industrial water, and the resultant value was used as the total hardness. In addition, regarding the hydrogen carbonate ion concentration of the feed water, the acid consumption (pH 4.8) was measured in accordance with the method specified in 13.1 Acid consumption (pH 4.8) in JIS K 0101:1998 Testing methods for industrial water, and the resultant value was taken as the hydrogen carbonate ion concentration. Regarding the free carbon dioxide concentration of the feed water, the alkali consumption (pH 8.3) was measured in accordance with the method specified in 14.1 Alkali consumption (pH 8.3) in JIS K 0101:1998 Testing methods for industrial water, and the resultant value was taken as the free carbon dioxide concentration.

For the measurement of the total hardness, the bicarbonate ion concentration, and the free carbon dioxide concentration, a potentiometric automatic titrator AT-710 (available from Kyoto Electronics Manufacturing Co., Ltd.) was used. As the power supply unit 14, a power supply device PK60-20 (available from Matsusada Precision Inc.) was used.

Tap water was used as feed water, which adjusted by the above-described measurement method, to prepare feed waters differing in water quality as shown in Table 1.

[Table 1]

| | Water quality of feed water | | | |
|---|---|---|---|---|
| | pH | Hardness (mg/L $CaCO_3$) | Hydrogen carbonate ion concentration (m mol/L) | Free carbon dioxide concentration (m mol/L) |
| Feed water 1-1 | 7.0 | 52.7 | 1.07 | 0.10 |

(continued)

| | Water quality of feed water | | | |
|---|---|---|---|---|
| | pH | Hardness (mg/L CaCO$_3$) | Hydrogen carbonate ion concentration (m mol/L) | Free carbon dioxide concentration (m mol/L) |
| Feed water 1-2 | 7.3 | 130.6 | 1.43 | 0.16 |
| Feed water 1-3 | 7.3 | 208.7 | 1.68 | 0.19 |
| Feed water 1-4 | 7.1 | 203.8 | 1.65 | 0.14 |
| Feed water 1-5 | 7.2 | 386.6 | 2.19 | 0.25 |

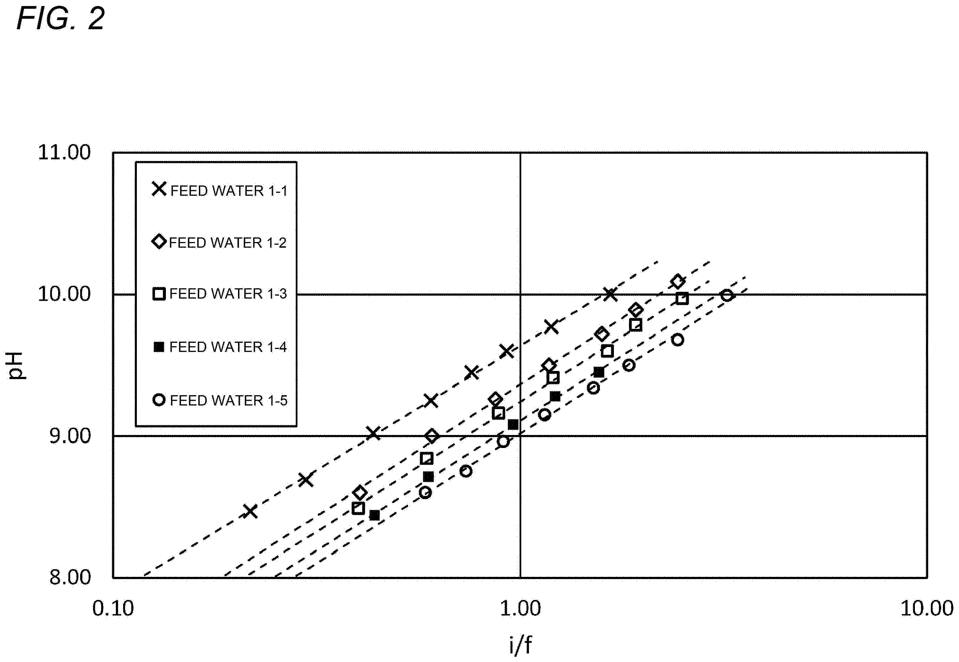

Using five feed waters differing in water quality in Table 1, electrolyzed water was generated under 35 sets of conditions with the (i/f) changed for each condition, and the pH of the generated electrolyzed water (cathode water) was actually measured. The 35 sets of conditions are show in the "Current" and "i/f" columns in Table 2. The actual measurement values were measured using a glass-electrode-method hydrogen ion concentration indicator D-74 and a pH electrode 9630-10D (available from HORIBA Advanced Techno, Co., Ltd.) as described above. The calculation values are values calculated from five linear approximation equations (i.e., the above-mentioned equation (1)) obtained using the actual measurement values. These results are shown in FIG. 2. As shown in FIG. 2, the results converged to five linear approximation equations based on feed waters 1-1 to 1-5.

[Table 2]

| Electrolysis condition | Current I [A] | i/f | pH value | | |
|---|---|---|---|---|---|
| | | | Actual measurement value | Calculation value | Difference |
| Feed water 1-1 | 0.5 | 1.67 | 10.0 | 10.0 | 0.0 |
| | | 1.19 | 9.8 | 9.8 | 0.0 |
| | | 0.93 | 9.6 | 9.6 | 0.0 |
| | | 0.76 | 9.5 | 9.4 | -0.1 |
| | | 0.60 | 9.3 | 9.2 | -0.1 |
| | | 0.43 | 9.0 | 9.0 | 0.0 |
| | | 0.30 | 8.7 | 8.7 | 0.0 |
| | | 0.22 | 8.5 | 8.4 | -0.1 |
| Feed water 1-2 | 1.0 | 2.44 | 10.1 | 10.1 | 0.0 |
| | | 1.92 | 9.9 | 9.9 | 0.0 |
| | | 1.59 | 9.7 | 9.7 | 0.0 |
| | | 1.18 | 9.5 | 9.5 | 0.0 |
| | | 0.87 | 9.3 | 9.3 | 0.0 |
| | | 0.61 | 9.0 | 9.0 | 0.0 |
| | | 0.40 | 8.6 | 8.7 | 0.1 |

(continued)

| Electrolysis condition | Current I [A] | i/f | pH value | | |
|---|---|---|---|---|---|
| | | | Actual measurement value | Calculation value | Difference |
| Feed water 1-3 | 1.0 | 2.50 | 10.0 | 10.0 | 0.0 |
| | | 1.92 | 9.8 | 9.8 | 0.0 |
| | | 1.64 | 9.6 | 9.6 | 0.0 |
| | | 1.20 | 9.4 | 9.4 | 0.0 |
| | | 0.88 | 9.2 | 9.2 | 0.0 |
| | | 0.59 | 8.8 | 8.8 | 0.0 |
| | | 0.40 | 8.5 | 8.5 | 0.0 |
| Feed water 1-4 | 0.5 | 1.56 | 9.5 | 9.5 | 0.0 |
| | | 1.22 | 9.3 | 9.3 | 0.0 |
| | | 0.96 | 9.1 | 9.1 | 0.0 |
| | | 0.60 | 8.7 | 8.7 | 0.0 |
| | | 0.44 | 8.5 | 8.5 | 0.0 |
| Feed water 1-5 | 1.0 | 3.23 | 10.0 | 9.9 | -0.1 |
| | | 2.44 | 9.7 | 9.7 | 0.0 |
| | | 1.85 | 9.5 | 9.5 | 0.0 |
| | | 1.52 | 9.3 | 9.3 | 0.0 |
| | | 1.15 | 9.2 | 9.1 | -0.1 |
| | | 0.91 | 9.0 | 8.9 | -0.1 |
| | | 0.74 | 8.8 | 8.8 | 0.0 |
| | | 0.58 | 8.6 | 8.6 | 0.0 |

The "Difference" column of pH in Table 2 shows the difference between the actual measurement value and the calculation value. All 35 results of the difference in pH between the actual measurement value and the calculation value were as small as ±0.1 or less, substantiating that the method disclosed in the present application was an effective method for determining the pH value of the electrolyzed water. This also shows that, according to the present method, with no necessity of any new devices (e.g., pH meter or pH sensor), the pH value of the electrolyzed water can be simply determined from the flow rate of the feed water in the electrolyzed water generator 1 and the applied current to the electrolytic bath 3. It is noteworthy that the pH value can be simply and accurately determined from (i/f).

Note that the above calculation method of the present invention will result in error when the pH of the electrolyzed water (cathode water) is in the range of 7.5 or less and in the range of 10.5 or more, and is preferably applied to the pH of the electrolyzed water in the range of 8.0 or more and 10.0 or less. In the present embodiment, it was applied to the pH in the range of approximately 8.5 to 10.1. The range of application may be expanded by mathematically providing a correction term or other ways.

In FIG. 2, linear approximation equations of five pH lines were obtained corresponding to five kinds of feed water. In FIG. 2, the measured values for feed water 1-1 are shown with crosses, the measured values for feed water 1-2 are shown with diamonds, the measured values for feed water 1-3 are shown with squares, the measured values for feed water 1-4 are shown with black squares, and the measured values for feed water 1-5 are shown with circles.

The linear approximation equations of five pH lines are shown below. Here, the constant B is a value when (i/f) = 1.

Feed water 1-1:

$$pH = 1.81\log(i/f) + 9.64$$

Feed water 1-2:

$$pH = 1.81\log(i/f) + 9.37$$

Feed water 1-3:

$$pH = 1.81\log(i/f) + 9.25$$

Feed water 1-4:

$$pH = 1.81\log(i/f) + 9.11$$

Feed water 1-5:

$$pH = 1.81\log(i/f) + 9.02$$

In this way, the gradients A of the linear approximation equations of the pH lines for different water qualities were all determined to be 1.81, and the constant B took different values depending on the water quality of each water. The meanings of the constant A and the constant B are as described above with regard to the control method of the electrolyzed water generator.

The above five pH lines can be generalized mathematically into the above-mentioned equation (1). This is expressed in a form similar to the above-mentioned equation (2) derived from the theoretical equation. It is interesting that pure water and quality water belonging to a complex system which actually has a great diversity are expressed in a similar form, and this suggests that pure water and quality water belonging to a complex system are not discontinuous. Successful derivation of the equation (1), which is expressed in a similar form to the equation (2) corresponding to pure water, has enhanced the validity (reliability), making it possible to directly and simply determine the pH of the electrolyzed water during electrolysis.

<<Embodiment 2>>

Embodiment 2 of the present disclosure will be described. The electrolyzed water generator 1 of the present embodiment differs from that of the above Embodiment 1, in that a plurality of pairs of anode 32 and cathode 31 are included. In the following, the difference from Embodiment 1 will be mainly described.

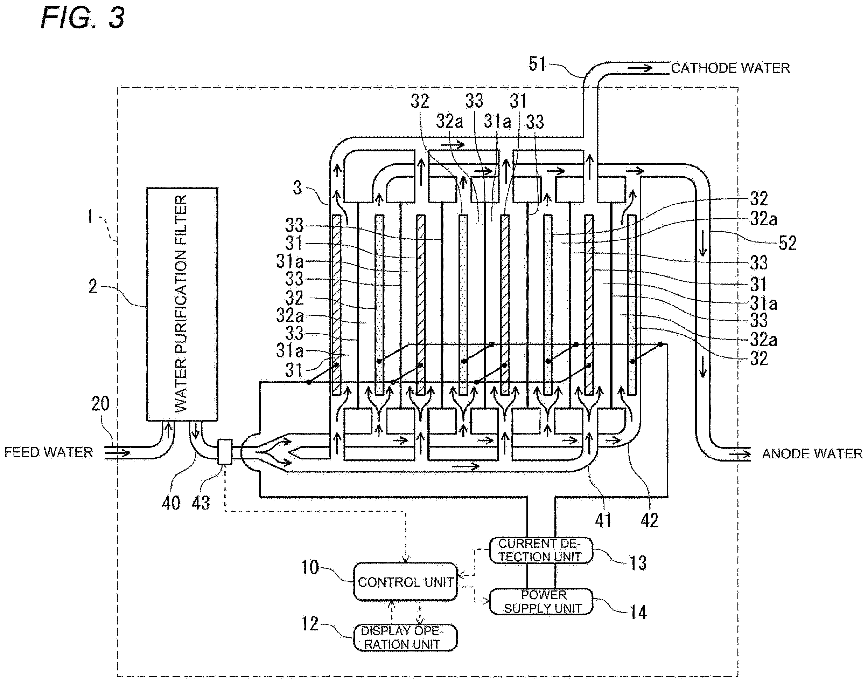

As illustrated in FIG. 3, the electrolyzed water generator 1 includes a plurality of pairs (seven pairs, in this example) of the anode 32 and the cathode 31, an electrolytic bath 3, a power supply unit 14, a current detection unit 13, a display operation unit 12, and a control unit 10. The electrolyzed water generator 1 further includes a water flow pipe 20, a water feed pipe 40, a cathode compartment water feed pipe 41, an anode compartment water feed pipe 42, a cathode compartment water spout pipe 51, and an anode compartment water spout pipe 52.

The anode 32 and the cathode 31 are each composed of an electrode plate. Each of the anode 32 and the cathode 31 may have, for example, a rectangular plate-like shape, but not limited thereto.

The electrolytic bath 3 has a plurality of (four, in this example) anode compartments 32a and a plurality of (four, in this example) cathode compartments 31a. The anode compartments 32a and the cathode compartments 31a are paired one to one. The paired anode and cathode compartments 32a and 31a are separated from each other by a diaphragm 33. One anode 32 is housed in each of the anode compartments 32a. One cathode 31 is housed in each of the cathode compartments 31a.

The power supply unit 14 is an element for allowing current to flow between the anode 32 and the cathode 31 by applying a DC voltage therebetween. The power supply unit 14 is connected to all of the anodes 32 and all of the cathodes 31.

The current detection unit 13 is an element for detecting a current flowing between the anode 32 and the cathode 31 during electrolysis. The information on the current detected by the current detection unit 13 is transmitted to the control unit 10. The current detection unit 13 of the present embodiment is configured to detect currents flowing between the plurality of the anodes 32 and the plurality of the cathodes 31, that is, a total current supplied from the power supply unit 14 to the electrolytic bath 3. The current detection unit 13 may be configured to detect currents flowing between some of the anodes 32 and some of the cathodes 31.

The display operation unit 12 is an element for displaying an operating state of the electrolyzed water generator 1 and operating the electrolyzed water generator 1. The display operation unit 12 may be composed of, for example, a touch panel. The display operation unit 12 displays an operating state of the electrolyzed water generator 1, in response to a command from the control unit 10. The display operation unit 12 displays the pH value of the electrolyzed water (cathode water) generated in the cathode compartment 31a, in response to a command from the control unit 10. The display operation unit 12, upon being operated by the user, transmits the operation information to the control unit 10. The display operation unit 12 is an example of the notification unit.

The control unit 10 is an element for controlling the power supply unit 14. The control unit 10 detects or calculates the pH of the cathode water based on the value of Alog(i/f) + B, where A and B are constants, with the applied current during the electrolysis (the aforementioned total current) denoted by i [A], and the flow rate of the feed water in the cathode compartment 31a during the electrolysis denoted by f [L/min]. The control unit 10 controls the display operation unit 12 to display the operating state of the electrolyzed water generator 1, and the detected pH value. Also, the control unit 10 resets the initial setting flag to 0, when an initial setting button (not shown) on the display operation unit 12 is pressed.

The water flow pipe 20, the water feed pipe 40, the cathode compartment water feed pipe 41, and the anode compartment water feed pipe 42 are pipes for supplying feed water into the electrolytic bath 3. The water flow pipe 20 and the water feed pipe 40 connect a supply source of feed water (e.g., water supply or well) to the cathode compartment water feed pipe 41 and the anode compartment water feed pipe 42. The cathode compartment water feed pipe 41 is connected to an inlet of each of the cathode compartments 31a. The anode compartment water feed pipe 42 is connected to an inlet of each of the anode compartments 32a.

A water purification filter 2 is provided between the water flow pipe 20 and the water feed pipe 40. The water feed pipe 40 is provided with a flow rate sensor 43. The water purification filter 2 contains, for example, activated carbon, which purifies the feed water having flowed thereinto through the water flow pipe 20, and sends the purified water into the water feed pipe 40. The flow rate sensor 43 detects the flow rate of the feed water flowing through the water feed pipe 40. The information on the flow rate detected by the flow rate sensor 43 is transmitted to the control unit 10.

The cathode compartment water spout pipe 51 and the anode compartment water spout pipe 52 are pipes for supplying the cathode water and the anode water generated in the electrolytic bath 3 to the outside. The cathode compartment water spout pipe 51 is connected to an outlet of each of the cathode compartments 31a. The anode compartment water spout pipe 52 is connected to an outlet of each of the anode compartments 32a.

- Electrolyzed water generator controlling method -

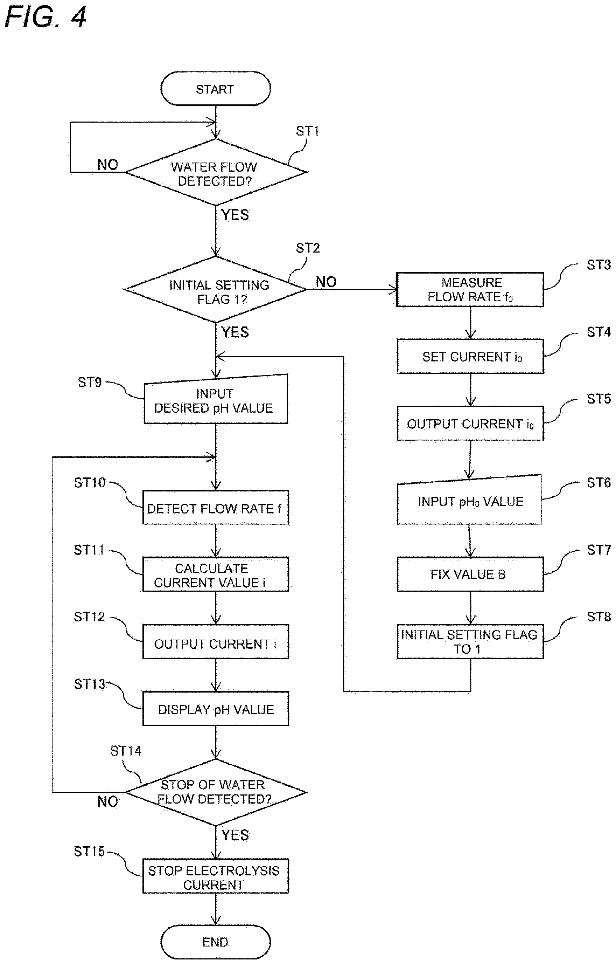

Next, a description will be given below of an example of an electrolyzed water generator controlling method according to the present disclosure, with reference to FIG. 4. According to the electrolyzed water generator controlling method, electrolyzed water (cathode water) with a desired pH can be supplied. The electrolyzed water generator controlling method includes steps 1 to 15 (ST1 to 15).

As illustrated in FIG. 4, in the step 1 (ST1), the presence or absence of water flow is checked. In the step 1, the control unit 10 may check the presence or absence of water flow, based on the detection signal from the flow rate sensor 43. If no water flow is detected (No, in step 1), the step 1 is repeated. If water flow is detected (Yes, in step 1), the process proceeds to the step 2.

In the step 2 (ST2), the execution status of the initial setting of the electrolyzed water generator 1 is checked. In the step 2, the control unit 10 determines that, if the initial setting flag is 1, the initial setting has been executed, and if the initial setting flag is not 1 (e.g., 0), the initial setting has been unexecuted. If the initial setting flag is 1, the process proceeds to the step 9. If the initial setting flag is not 1, the process proceeds to the step 3.

In the step 3 (ST3), the flow rate $f_0$ [L/min] of the feed water in the cathode compartment 31a is detected. In the step 3, the control unit 10 may detect the flow rate $f_0$ [L/min] of the feed water in the cathode compartment 31a, based on the signal from the flow rate sensor 43. Next, the process proceeds to the step 4.

In the step 4 (ST4), the current $i_0$ [A] is set to be the same value as the flow rate $f_0$ expressed in the unit of [L/min]. In this example, $i_0$ is set to be $(i_0/f_0) = 1$. Note that this set value is merely an example, and can be set to any $(i_0/f_0)$ value, and a plurality of $(i_0/f_0)$ values may be set. However, when this setting value is adopted, the first term on the right side of the equation (1) becomes 0, and the constant B can be simply fixed. Next, the process proceeds to the step 5.

In the step 5 (ST5), the applied current of the $i_0$ [A] set in the step 4 is outputted. In the step 5, the control unit 10 may control the power supply unit 14 so as to output the applied current of the $i_0$ [A]. Next, the process proceeds to the step 6.

In the step 6 (ST6), the measured value of $pH_0$ of the cathode water is inputted via the display operation unit 12. For measuring the $pH_0$, for example, a pH meter can be used, but is not limited thereto. Next, the process proceeds to the step 7.

In the step 7 (ST7), the value of the constant A has been set in advance, and the value of the constant B is fixed. The value of the constant B can be fixed by substituting to be $pH = pH_0$ and $Alog(i/f) = Alog(i_0/f_0)$ in the equation (1). Here, as mentioned above, when $i_0$ is set to be $(i_0/f_0) = 1$, the equation (1) takes the form of $pH_0 = B$, and the value of the constant B can be easily fixed. Next, the process proceeds to the step 8.

In the step 8 (ST8), the control unit 10 sets the initial setting flag to 1, which indicates that the initial setting has been executed. Furthermore, in the step 8, the control unit 10 clears the inputted $pH_0$ value. Next, the process proceeds to the step 9.

In the step 9 (ST9), the user inputs a desired pH value via the display operation unit 12. This input may be done by inputting a desired numerical value or by selecting from a plurality of options prepared in advance. Then, the process proceeds to the step 10.

In the step 10 (ST10), the flow rate f of the feed water in the cathode compartment 31a is detected. In the step 10, the control unit 10 may detect the flow rate f, based on the signal from the flow rate sensor 43. Next, the process proceeds to the step 11.

In the step 11 (ST11), the constant A, the constant B, a desired pH value, and the value of the flow rate f [L/min] are substituted into the equation (1), to calculate the applied current i [A]. Note that the applied current i may be fixed according to a table stored in the memory device of the control unit 10. Next, the process proceeds to the step 12.

In the step 12 (ST12), the applied current i [A] calculated in the step 11 is outputted to the electrolytic bath 3. In the step 11, the control unit 10 may control the power supply unit 14 so as to output the calculated applied current i. Then, the process proceeds to the step 13.

In the step 13 (ST13), the constant A, the constant B, the value of the flow rate f [L/min] of the feed water in the cathode compartment 31a, and the value of the applied current i [A] are substituted into the equation (1), to calculate the pH value of the cathode water generated, which is then displayed on the display operation unit 12. When a desired pH value has been inputted, the inputted pH value may be displayed, or when no desired pH value has been inputted, the pH value of the cathode water currently discharged may be displayed. Then, the process proceeds to the step 14.

In the step 14 (ST14), whether or not the water flow has stopped is checked. In the step 14, the control unit 10 may check whether or not the water flow has stopped, based on the detection signal of the flow rate sensor 43. If the stop of water flow is not detected (No, in step 14), the process returns to the step 10. If the stop of water flow is detected (Yes, in step 14), the process proceeds to the step 15.

In the step 15 (ST15), the output of the applied current is stopped, and the series of controls end. In the step 15, the control unit 10 may control the power supply unit 14 so as not to apply a voltage between the anode 32 and the cathode 31.

To set the initial settings again, the initial setting button may be pressed, to reset the initial setting flag to 0. Note that in the initial settings, at least the value of the constant B is set, and, as necessary, the value of the constant A may also be set. The value of the constant B may be set as a value corresponding to the water quality of the feed water introduced into the electrolyzed water generator 1.

Although the value of the constant A is set in advance in the present embodiment, the values of the constant A and the constant B may be fixed by repeating the steps 3 to 6, with a plurality of $(i_0/f_0)$ values set. The value of the constant A may be set as a value intrinsic to the electrolyzed water generator 1, based on the actual measurement pH value ($pH_0$ value) of the cathode water and the i/f value (a plurality of $(i_0/f_0)$ values). Here, the value of the constant A corresponds to the slope of a pH line obtained by plotting a plurality of $(i_0/f_0)$ values and their corresponding $pH_0$ values as shown in the graph of FIG. 2.

- Measurement test using electrolyzed water generator -

In the electrolyzed water generator 1 as described above, a program for executing the control method described with reference to FIG. 4 was stored in the control unit 10. Then, following the program, a desired pH value was inputted, and the inputted value was compared with the actual measurement pH value of the cathode water generated.

For the measurement test, feed waters differing in water quality shown in Table 3 were used. The value of the constant A in the electrolyzed water generator 1 obtained by a separate measurement was 2.2, and this value was used in the test.

[Table 3]

| | Water quality of feed water | | | |
|---|---|---|---|---|
| | pH | Hardness (mg/L CaCO$_3$) | Hydrogen carbonate ion concentration (m mol/L) | Free carbon dioxide concentration (m mol/L) |
| Feed water 2-1 | 7.2 | 190.6 | 1.51 | 0.12 |
| Feed water 2-2 | 7.3 | 324.8 | 2.00 | 0.14 |

The electrolyzed water generator 1 was operated using feed water 2-1. The measured value of $pH_0$ at the time of initial setting was 9.09, and this value was inputted to fix the value of the constant B.

In Table 4 below, the desired pH value is shown in the "Desired value" column, the actual measurement pH value of the cathode water discharged from the cathode compartment water spout pipe 51 is shown in the "Actual measurement value" column, and the difference between the two is shown in the "Difference" column. The pH value was measured in the same manner as that in Embodiment 1.

[Table 4]

| | Cathode flow rate (L/min) | pH value | | |
|---|---|---|---|---|
| | | Desired value | Actual measurement value | Difference |
| Feed water 2-1 | 1.3 | 9.9 | 9.9 | 0.0 |
| | 3.8 | 9.5 | 9.4 | -0.1 |
| | 2.4 | 9.3 | 9.3 | 0.0 |
| | 3.8 | 8.9 | 8.9 | 0.0 |
| | 2.4 | 8.6 | 8.6 | 0.0 |
| | 3.8 | 8.2 | 8.1 | -0.1 |

The electrolyzed water generator 1 was operated using feed water 2-2. The measured value of $pH_0$ at the time of initial setting was 8.84, and this value was inputted to fix the value of the constant B.

In Table 5 below, the items of the columns are respectively the same as those in Table 4. The pH value was measured in the same manner as that in Embodiment 1.

[Table 5]

| | Cathode flow rate (L/min) | pH value | | |
|---|---|---|---|---|
| | | Desired value | Actual measurement value | Difference |
| Feed water 2-2 | 2.4 | 9.7 | 9.6 | -0.1 |
| | 3.8 | 9.3 | 9.3 | 0.0 |
| | 1.3 | 9.0 | 9.0 | 0.0 |
| | 2.4 | 9.0 | 9.1 | +0.1 |
| | 3.7 | 8.6 | 8.6 | 0.0 |
| | 2.4 | 8.4 | 8.4 | 0.0 |

The results of the difference between the desired value and the actual measurement value in Tables 4 and 5 were as small as ±0.1 or less. This substantiates that the method according to the present disclosure is effective also in the electrolyzed water generator 1 having the structure of Embodiment 2.

[Examples]

In Examples 1 and 2 below, in the electrolyzed water generator 1 having the structure of Embodiment 2, a program for executing the control method described with reference to FIG. 4 was stored in the control unit 10, so that a desired electrolyzed water was generated following the program.

«Example 1»

In the electrolyzed water generator 1 having the structure of Embodiment 2, a program for executing the control method described with reference to FIG. 4 was stored in the control unit 10. Following the program in the electrolyzed water generator 1, the measured value of $pH_0$ of 8.98 at the time of initial setting was inputted. With the desired pH value inputted as 9.5, electrolyzed water was discharged until it reached a full cup, upon which the pH value was measured with the pH meter as used in Embodiment 1. The measured pH value was 9.4. The desired pH was obtained, and the difference from the measured value was small. It was confirmed that the same results as in Embodiment 1 were obtained even with the conditions changed.

«Example 2»

In the electrolyzed water generator 1 having the structure of Embodiment 2, a program for executing the control method described with reference to FIG. 4 was stored in the control unit 10. Following the program in the electrolyzed water generator 1, the steps 3 to 6 were repeated five times, to input the $pH_0$ used at initial setting. In this process, a plurality of different $(i_0/f_0)$ values were set, to fix the values of the constant A and the constant B. With the desired pH value inputted as 9.0, electrolyzed water was discharged until it reached a full cup, upon which the pH value was measured with the pH meter as used in Embodiment 1. The measured pH value was 9.0. The desired pH was obtained, and there was no difference from the measured value. It was confirmed that the same results as in Embodiment 2 were obtained, even though the process for determining the $pH_0$ was changed, and the values of the constant A and the constant B were both newly fixed at the same time.

As described above, both in Example 1 in which the value of the constant A was set in advance, and in Example 2 in which the values of the constant A and the constant B were fixed with a plurality of $(i_0/f_0)$ values set, it was possible to obtain electrolyzed water (cathode water) with a desired pH.

Although the present invention has been described in terms of the presently preferred embodiments, it is to be understood that such disclosure is not to be interpreted as limiting. Various alterations and modifications will no doubt become apparent to those skilled in the art to which the present invention pertains, after having read the above disclosure. Accordingly, it is intended that the appended claims be interpreted as covering all alterations and modifications as fall within the true spirit and scope of the invention.

[Industrial Applicability]

The present disclosure can be used in an electrolyzed water generator and a method of controlling the electrolyzed water generator.

[Reference Signs List]

1: electrolyzed water generator
10: control unit
12: display operation unit (notification unit)
13: current detection unit
14: power supply unit
2: water purification filter
20: water flow pipe
3: electrolytic bath
31: cathode
31a: cathode compartment
32: anode
32a: anode compartment
33: diaphragm

40: water feed pipe
41: cathode compartment water feed pipe
42: anode compartment water feed pipe
43: flow rate sensor
51: cathode compartment water spout pipe
52: anode compartment water spout pipe

**Claims**

1. An electrolyzed water generator, comprising:

   at least a pair of an anode and a cathode;
   an electrolytic bath having an anode compartment and a cathode compartment separated from each other by a diaphragm, with the anode housed in the anode compartment, and the cathode housed in the cathode compartment;
   a power supply unit for allowing current to flow between the anode and the cathode; and
   a control unit for controlling the power supply unit,
   the control unit being configured to control the power supply unit so as to cause electrolysis of feed water introduced into the electrolytic bath, so that cathode water is generated in the cathode compartment and anode water is generated in the anode compartment, wherein
   the control unit detects a pH of the cathode water based on a value of $A\log(i/f) + B$, where A and B are constants, with an applied current during the electrolysis denoted by i [A] and a flow rate of the feed water in the cathode compartment during the electrolysis denoted by f [L/min].

2. The electrolyzed water generator according to claim 1, wherein a value of the constant A is set as a value intrinsic to the electrolyzed water generator, based on an actual measurement value of pH of the cathode water and a value of i/f.

3. The electrolyzed water generator according to claim 1 or 2, wherein a value of the constant B is set as a value corresponding to water quality of the feed water, based on at least an actual measurement value of pH of the cathode water.

4. The electrolyzed water generator according to any one of claims 1 to 3, further comprising a notification unit configured to notify an information regarding the detected pH of the cathode water.

5. A method for controlling an electrolyzed water generator which includes

   at least a pair of an anode and a cathode,
   an electrolytic bath having an anode compartment and a cathode compartment separated from each other by a diaphragm, with the anode housed in the anode compartment, and the cathode housed in the cathode compartment, and
   a power supply unit for allowing current to flow between the anode and the cathode, the method comprising steps of:

   (i) controlling the power supply unit so as to cause electrolysis of feed water introduced into the electrolytic bath, so that cathode water is generated in the cathode compartment and anode water is generated in the anode compartment; and
   (ii) detecting a pH of the cathode water based on a value of $A\log(i/f) + B$, where A and B are constants, with an applied current during the electrolysis denoted by i [A] and a flow rate of the feed water in the cathode compartment during the electrolysis denoted by f [L/min].

6. The method for controlling an electrolyzed water generator according to claim 5, further comprising a step (iii) of, before the step (ii), setting a value of the constant A as a value intrinsic to the electrolyzed water generator, based on an actual measurement value of pH of the cathode water and a value of i/f.

7. The method for controlling an electrolyzed water generator according to claim 5 or 6, further comprising a step (iv) of, before the step (ii), setting a value of the constant B as a value corresponding to water quality of the feed water, based on at least an actual measurement value of pH of the cathode water.

8. The method for controlling an electrolyzed water generator according to any one of claims 5 to 7, further comprising a step (v) of notifying an information regarding the detected pH of the cathode water.

## FIG. 1

CATHODE WATER

ANODE WATER

FEED WATER

| POWER SUPPLY UNIT | CONTROL UNIT |

*FIG. 2*

EP 4 410 747 A1

FIG. 3

EP 4 410 747 A1

# FIG. 4

```
                    ┌──────────────┐
                    │    START     │
                    └──────┬───────┘
                           │
              ┌────────────▼────────────┐  ST1
    ┌─── NO ──┤   WATER FLOW DETECTED?   │
    │         └────────────┬────────────┘
    │                      │ YES
    │                      │
    │         ┌────────────▼────────────┐  ST2        ┌────────────────┐  ST3
    │         │   INITIAL SETTING FLAG 1?├── NO ──────►│  MEASURE       │
    │         └────────────┬────────────┘             │  FLOW RATE f0  │
    │                      │ YES                       └───────┬────────┘
    │                      │                                   │
    │   ST9 ┌──────────────▼──────────────┐            ┌───────▼────────┐  ST4
    │       │   INPUT DESIRED pH VALUE    │            │ SET CURRENT i0 │
    │       └──────────────┬──────────────┘            └───────┬────────┘
    │                      │                                   │
    │  ST10 ┌──────────────▼──────────────┐            ┌───────▼────────┐  ST5
    │       │    DETECT FLOW RATE f       │            │OUTPUT CURRENT i0│
    │       └──────────────┬──────────────┘            └───────┬────────┘
    │                      │                                   │
    │  ST11 ┌──────────────▼──────────────┐            ┌───────▼────────┐  ST6
    │       │  CALCULATE CURRENT VALUE i  │            │ INPUT pH0 VALUE│
    │       └──────────────┬──────────────┘            └───────┬────────┘
    │                      │                                   │
    │  ST12 ┌──────────────▼──────────────┐            ┌───────▼────────┐  ST7
    │       │     OUTPUT CURRENT i        │            │  FIX VALUE B   │
    │       └──────────────┬──────────────┘            └───────┬────────┘
    │                      │                                   │
    │  ST13 ┌──────────────▼──────────────┐            ┌───────▼────────┐  ST8
    │       │     DISPLAY pH VALUE        │            │INITIAL SETTING │
    │       └──────────────┬──────────────┘            │  FLAG TO 1     │
    │                      │                            └────────────────┘
    │  ST14 ┌──────────────▼──────────────┐
    └─ NO ──┤ STOP OF WATER FLOW DETECTED?│
            └──────────────┬──────────────┘
                           │ YES
    ST15 ┌─────────────────▼────────────────┐
         │   STOP ELECTROLYSIS CURRENT      │
         └─────────────────┬────────────────┘
                           │
                    ┌──────▼───────┐
                    │     END      │
                    └──────────────┘
```

## INTERNATIONAL SEARCH REPORT

| | International application No. |
|---|---|
| | **PCT/JP2022/012289** |

**A. CLASSIFICATION OF SUBJECT MATTER**

*C02F 1/461*(2006.01)i
FI: C02F1/461 A

According to International Patent Classification (IPC) or to both national classification and IPC

**B. FIELDS SEARCHED**

Minimum documentation searched (classification system followed by classification symbols)

C02F1/461

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 4-197488 A (JAPAN STORAGE BATTERY CO LTD) 17 July 1992 (1992-07-17) claims, p. 2, upper right column, line 1, p. 3, upper right column, line 11, fig. 1 | 1, 4-5, 8 |
| Y | | 1-8 |
| X | JP 2000-33374 A (CORONA KOGYO KK) 02 February 2000 (2000-02-02) claims, paragraphs [0003]-[0008], [0021]-[0051], fig. 1-5 | 1-8 |
| Y | | 1-8 |
| X | JP 2000-354868 A (CORONA KOGYO KK) 26 December 2000 (2000-12-26) claims, paragraphs [0002]-[0004], [0015]-[0068], fig. 1-2, 8-13 | 1-8 |
| Y | | 1-8 |
| Y | JP 6-238275 A (MATSUSHITA ELECTRIC WORKS LTD) 30 August 1994 (1994-08-30) claims, paragraphs [0007]-[0017], fig. 1-5 | 1-8 |
| Y | JP 2016-73894 A (NIPPON TORIMU KK) 12 May 2016 (2016-05-12) claims, paragraphs [0010]-[0013], [0043]-[0050], fig. 4 | 1, 4-5, 8 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **13 May 2022** | **31 May 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/012289**

| Patent document cited in search report | | | Publication date (day/month/year) | Patent family member(s) | Publication date (day/month/year) |
|---|---|---|---|---|---|
| JP | 4-197488 | A | 17 July 1992 | (Family: none) | |
| JP | 2000-33374 | A | 02 February 2000 | (Family: none) | |
| JP | 2000-354868 | A | 26 December 2000 | (Family: none) | |
| JP | 6-238275 | A | 30 August 1994 | (Family: none) | |
| JP | 2016-73894 | A | 12 May 2016 | (Family: none) | |

Form PCT/ISA/210 (patent family annex) (January 2015)

**REFERENCES CITED IN THE DESCRIPTION**

**Patent documents cited in the description**

- JP H4197488 A

- JP H7108272 A